**Europäisches Patentamt**

**European Patent Office**

**Office européen des brevets**

(11) Publication number: **0 313 276**
**B1**

(12) **EUROPEAN PATENT SPECIFICATION**

(45) Date of publication of patent specification: **06.02.91**

(21) Application number: **88309642.2**

(22) Date of filing: **14.10.88**

(51) Int. Cl.⁵: **C 10 G 45/64, B 01 J 29/28**

(54) **Catalytic hydrodewaxing process.**

(30) Priority: **22.10.87 US 111324**

(43) Date of publication of application:
**26.04.89 Bulletin 89/17**

(45) Publication of the grant of the patent:
**06.02.91 Bulletin 91/06**

(84) Designated Contracting States:
**BE DE ES FR GB IT NL**

(56) References cited:
**WO-A-88/08329**
**US-A-4 247 388**
**US-A-4 437 976**
**US-A-4 582 815**
**US-A-4 665 265**

(73) Proprietor: **MOBIL OIL CORPORATION**
**150 East 42nd Street**
**New York New York 10017 (US)**

(72) Inventor: **Absil, Robert Peter**
**P-311 Heather Ridge Apartments Mantua**
**New Jersey 08051 (US)**
Inventor: **Vartuli, James Clarke**
**320 Ponds Edge Road West Chester**
**Pennsylvania 19380 (US)**

(74) Representative: **Colmer, Stephen Gary**
**Patent Department c/o Mobil Services Company**
**Limited Mobil Court 3 Clements Inn**
**London WC2A 2EB (GB)**

**Description**

This invention relates to a process for the catalytic hydrodewaxing of a waxy hydrocarbon oil to provide a lubricating oil of high viscosity index (V.I.). The invention is specifically directed to a process for catalytically hydrodewaxing a waxy distillate lubricating oil utilizing a low acidity refractory oxide-bound intermediate pore size zeolite, e.g., silica-bound ZSM-5 or silica-bound ZSM-35, to obtain a lubricating oil of low pour point and of high V.I.

Refining suitable petroleum crude oils to obtain a variety of lubricating oils which function effectively in diverse environments has become a highly developed and complex art. Although the broad principles involved in refining are qualitatively understood, the art is encumbered by quantitative uncertainties which require considerable resort to empiricism in practical refining. Underlying these quantitative uncertainties is the complexity of the molecular constitution of lubricating oils. Because lubricating oils for the most part are based on petroleum fractions boiling above about 232°C (450°F), the molecular weight of the hydrocarbon constituents is high and these constituents display almost all conceivable structure types. This complexity and its consequences are referred to in well known treatises, such as, for example, in "Petroleum Refinery Engineering," by W. L. Nelson, McGraw Hill Book Company, Inc., New York, N.Y., 1958 (Fourth Edition).

In general, the basic premise in lubricant refining is that a suitable crude oil, as shown by experience or by assay, contains a quantity of lubricant stock having a predetermined set of properties such as, for example, appropriate viscosity, oxidation stability, and maintenance of fluidity at low temperatures. The process of refining to isolate that lubricant stock consists of a set of subtractive unit operations which removes the unwanted components. The most important of these unit operations include distillation, solvent refining, and dewaxing, which basically are physical separation processes in the sense that if all the separated fractions were recombined one would reconstitute the crude oil.

A refined lubricant stock may be used as such as a lubricant, or it may be blended with another refined lubricant stock having different properties. Or, the refined lubricant stock, prior to use as a lubricant, may be compounded with one or more additives which function, for example, as antioxidants, extreme pressure additives, and V.I. improvers.

For the preparation of a high grade distillate lubricating oil stock, the current practice is to vacuum distill an atmospheric tower residiuum from an appropriate crude oil as the first step. This step provides one or more raw stocks within the boiling range of about 232°C (450°) to 566°C (1050°F) After preparation of a raw stock of suitable boiling range, it is extracted with a solvent, e.g., furfural, phenol, sulfalane, or chlorex, which is selective for aromatic hydrocarbons, and which removes undesirable components. The raffinate from solvent refining is then dewaxed, for example by admixing with a solvent such as a blend of methyl ethyl ketone and toluene. The mixture is chilled to induce crystallization of the paraffin waxes which are then separated from the raffinate. Sufficient quantities of wax are removed to provide the desired pour point for the raffinate.

Other processes such as hydrofinishing or clay percolation may be used if needed to reduce the nitrogen and sulfur contents or improve the color of the lubricating oil stock.

Viscosity index (V.I.) is a quality parameter of considerable importance for distillate lubricating oils to be used in automotive engines and aircraft engines which are subject to wide variations in temperature. This Index indicates the rate of change of viscosity with temperature. A high viscosity index of 100 indicates an oil that does not tend to become viscous at low temperatures or become thin at high temperatures. Measurement of the Saybolt Universal Viscosity of an oil at 54° (130°) and 38°C (100°F), and referral to correlations, provides a measure of the V.I. of the oil. For purposes of the present invention, whenever V.I. is referred to it is meant the V.I. as noted in the Viscosity Index tabulations of the ASTM (D567), published by ASTM, 1916 Race St., Philadelphia 3, Pa., or equivalent.

To prepare high V.I. automotive and aircraft oils the refiner usually selects a crude oil relatively rich in paraffin hydrocarbons, since experience has shown that crudes poor in paraffins, such as those commonly termed "naphthene-base" crudes, yield little or no refined stock having a V.I. above about 40. Suitable stocks for high V.I. oils, however, also contain substantial quantities of waxes which result in solvent-refined lubricating oil stocks of high pour point. Thus, in general, the refining of crude oil to prepare acceptable high V.I. distillate stocks ordinarily includes dewaxing to reduce the pour point.

In recent years, catalytic techniques have become available for dewaxing of petroleum stocks. Catalytic dewaxing, unlike prior-art dewaxing processes, although subtractive, is not a physical process but rather depends on transforming the straight chain and other waxy paraffins to nonwax materials. The process, however, is more economical and thus of industrial interest even though at least some loss of saleable wax is inherent. Commercial interest in catalytic dewaxing is evidence of the need for more efficient refinery processes to produce low pour point lubricants.

U.S. Reissue Patent No. 28,398 describes a process for catalytic dewaxing with a catalyst comprising zeolite ZSM-5. Such a process combined with catalytic hydrofinishing is described in U.S. Patent No. 3,894,938. U.S. Patent No. 3,755,138 describes a process for mild solvent dewaxing to remove high quality wax from a lube stock, which is then catalytically dewaxed to specification pour point. U.S. Patent No. 4,222,855 describes dewaxing operations to produce lubricating oils of low pour point and of high V.I. utilizing a special class of zeolites which includes ZSM-23 and ZSM-35.

U.S. Patent No. 4,247,388 describes dewaxing operations utilizing ZSM-5 type zeolites of specific activity.

U.S. Patent No. 4,372,839 describes a catalytic dewaxing process employing two different zeolites such as ZSM-5 and ZSM-35.

U.S. Patent No. 4,582,815 describes a method for preparing a silica-bound zeolite of improved crush strength relative to other silica-rich zeolites. According to this method, a mixture of silica and a zeolite such as ZSM-4 (Omega), ZSM-5, ZSM-11, ZSM-12, ZSM-23, ZSM-35, ZSM-38, ZSM-48, Beta, X, Y, L, ferrierite, mordenite, dachiardite, clinoptilolite, offretite, erionite, gmelinite, chabazite, etc., is mixed with water and an alkali metal base such as sodium hydroxide or a basic salt such as an alkali-metal carbonate, borate, phosphate, silicate, etc., as an extrusion aid followed by mulling, extruding and subsequently drying the extrudate. It is thought that substitution of alkali metal for hydrogen in the silanol groups on the surfaces of siliceous materials such as the foregoing zeolites is responsible for their improved crush strength. The resulting extrudate is said to possess superior crush strength and sufficient integrity to withstand treatment with acids so that it is possible to steam, acid extract or calcine them. To avoid trapping the alkali metal of the extrusion aid in the extrudate, the alkali metal is ordinarily removed by exchange under acidic conditions using dilute nitric acid in 1 M ammonium nitrate solution. The silica-bound zeolite catalyst of U.S. Patent No. 4,582,815 is indicated to be useful in a variety of hydrocarbon conversions including hydrocracking, isomerization, hydrogenation, dehydrogenation, polymerization, reforming, catalytic cracking and catalytic hydrocracking.

In the method for preparing a low acidity refractory oxide-bound zeolite catalyst composition described in commonly assigned, copending U.S. patent application Serial No. 44,639, filed May 1, 1987, corresponding to WO 88/08329 a homogeneous mixture of an intermediate pore size zeolite such as ZSM-5 (ZSM-35 is also mentioned), water and a low acidity refractory oxide binder, e.g., silica, which contains at least an extrusion-facilitating amount of the binder in a colloidal state and which is substantially free of added alkali metal base and/or basic salt is formed into an extrudable mass, the mass is extruded and the extrudate is dried and calcined. The resulting catalyst is disclosed to be useful in the same sort of hydrocarbon conversion processes mentioned in U.S. Patent No. 4,582,815, supra. There is no recognition or appreciation in U.S. patent application Serial No. 44,639 that a low acidity refractory oxide-bound intermediate pore size zeolite catalyst composition will demonstrate improved activity and stability in a catalytic dewaxing operation compared with the same zeolite bound with alumina.

It has now been discovered that an intermediate pore size zeolite which has been bound with a low acidity refractory oxide binder material in the manner disclosed in aforesaid U.S. patent application Serial No. 44,639 when employed in the catalytic hydrodewaxing of a waxy hydrocarbon oil shows significantly improved activity and stability in such an operation compared with the same type zeolite composited with an acidic binder material such as alumina.

Thus, in accordance with the present invention, a process for the catalytic hydrodewaxing of a waxy hydrocarbon fraction to provide a lubricating oil of high viscosity index is provided which comprises contacting such a fraction boiling within the approximate range of from about 232°C (450°) to about 566°C (1050°F) under catalytic hydrodewaxing conditions with an extruded low acidity refractory oxide-bound intermediate pore size zeolite dewaxing catalyst which has been prepared with at least an extrusion facilitating amount of the refractory oxide in colloidal form in the presence or absence of a hydrogenation/ dehydrogenation metal component to provide said high viscosity index lubricating oil.

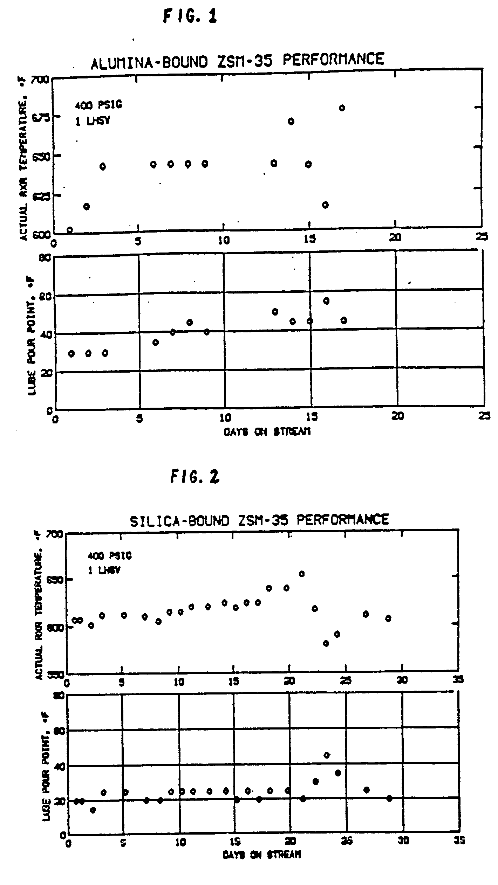

Figs. 1 and 2 are graphic representations of the performance, respectively, of alumina-bound ZSM-35 (prior art) and low acidity silica-bound ZSM-35 (this invention) employed in the hydrodewaxing of a light neutral raffinate charge stock under essentially the same hydrodewaxing conditions.

The intermediate pore size zeolite component of the catalyst composition employed in the hydrodewaxing process of the present invention possesses a pore dimension greater than about 5 Angstroms and a Constraint Index in the approximate range of from about 1 to about 12*. Zeolites of this type can be natural, synthetic or a mixture of the two. Representative of the useful zeolites are zeolite ZSM-5 (U.S. Patent No. 3,702,886; Re. 29,948), zeolite ZSM-11 (U.S. Patent No. 3,709,979), zeolite ZSM-12 (U.S. Patent No. 3,832,449), zeolite ZSM-22 (European Patent Application No. 102,716), zeolite ZSM-23 (U.S. Patent No. 4,076,842) and ZSM-35 (U.S. Patent No. 4,016,245). Of the foregoing, ZSM-35 is preferred.

The original cations associated with the zeolites utilized herein can be replaced by a wide variety of other cations according to techniques well known in the art. Typical replacing cations include hydrogen, ammonium and metal cations and mixtures of the same. Of the replacing metallic cations, particular preference is given to cations of metals such as the rare earth metals, manganese, calcium, as well as metals of Group II of the Periodic Table, e.g., zinc, and Group VIII of the Periodic Table, e.g., nickel, platinum and palladium.

---

* Constraint Index is an art-recognized way of characterizing the capability of a zeolite to provide constrained access of material to its pore structure and egress of material therefrom. For a detailed explanation of the significance of the Constraint Index and the manner by which it is determined for a particular zeolite, reference may be made, *inter alia,* to the relevant disclosure in U.S. Patent No. 4,247,388 referred to above.

Typical ion exchange techniques involve contacting the particular zeolite with a salt of the desired replacing cation. Although a wide variety of salts can be employed, particular preference is given to chlorides, nitrates and sulfates.

Representative ion exchange techniques are disclosed in a variety of patents including U.S. Patent Nos. 3,140,249; 3,140,251; and 3,140,253.

Following contact with a solution of the desired replacing cation, the zeolite is then preferably washed with water and dried at a temperature ranging from 65°C (150°F) to about 316°C (600°F) and thereafter calcined in air or other inert gas at temperatures ranging from about 260°C (500°F) to 816°C (1500°F) for periods of time ranging from 1 to 48 hours or more. Improved selectivity and other beneficial properties can be obtained by subjecting the zeolite to treatment with steam at elevated temperatures ranging from 427°C (800°F) to 816°C (1500°F) and preferably 538°C (1000°F) and 760°C (1400°F). The treatment can be accomplished in atmospheres of 100% steam or an atmosphere consisting of steam and a gas which is substantially inert to the zeolites. A similar treatment can be accomplished at lower temperatures and elevated pressure, e.g., 177°—371°C (350°—700°F) at 1000 to 1480 kPa (10 to about 200 atmospheres).

The zeolite utilized in the process of this invention is desirably employed in intimate combination with a hydrogenation-dehydrogenation component in an amount between about 0.1 and about 5 weight percent. Components of this type include tungsten, vanadium, zinc, molybdenum, rhenium, nickel, cobalt, chromium, manganese or a noble metal such as platinum or palladium.

Such component can be exchanged into the composition, impregnated thereon or physically intimately admixed therewith. Such component can be impregnated in or onto the zeolite such as, for example, in the case of platinum, by treating the zeolite with a platinum metal-containing ion. Suitable platinum compounds include chloroplatinic acid, platinous chloride and various compounds containing the platinum complex. Platinum, palladium, zinc and nickel are preferred hydrogenation components.

The compounds of the useful platinum or other metals can be divided into compounds in which the metal is present in the cation of the compound and compounds in which it is present in the anion of the compound. Both types of compounds which contain the metal in the ionic state can be used. A solution in which platinum metal is in the form of a cation or cationic complex, e.g., Pt(NH2)4C12 is particularly useful.

Prior to use in catalytic hydrodewaxing, the zeolite should be dehydrated at least partially. This can be done by heating to a temperature in the range of 200° to 600°C in an inert atmosphere, such as air, nitrogen, etc. and at atmospheric or subatmospheric pressures for between 1 and 48 hours. Dehydration can also be performed at lower temperatures merely by using a vacuum but a longer time is required to obtain a sufficient degree of dehydration.

The binder material herein can be selected from among any of the low acidity refractory oxides of metals of Groups IVA and IVB of the Periodic Table of the Elements. Particularly useful are the oxides of silicon, germanium, titanium and zirconium with silica being preferred. Combinations of such oxides with other oxides are also useful provided that at least about 40 weight percent, and preferably at least 50 weight percent, of the total oxide is one or a combination of the aforesaid Group IVA and/or Group IVB metal oxides. Thus, mixtures of oxides which can be used to provide the binder material herein include silica-alumina, silica-magnesia, silica-zirconia, silica-thoria, silica-beryllia, silica-titania, titania-zirconia, silica-alumina-thoria, silica-alumina-zirconia, silica-alumina-magnesia and silica-magnesia-zirconia.

In preparing the low acidity refractory oxide-bound intermediate pore zeolite catalyst employed herein, it is essential that the refractory oxide binder contain at least an extrusion-facilitating amount of the same or different low acidity refractory oxide binder in colloidal form. The colloidal Group IVA and or Group IVB metal oxide component of the binder can represent anywhere from about 1 to about 90 weight percent or more of the total binder. For example, in the case of silica, amounts of colloidal silica ranging from about 2 to about 60 weight percent of the total binder generally provide entirely acceptable results.

The relative proportions of zeolite and low acidity refractory oxide binder on an anhydrous basis can vary widely with the zeolite content ranging from between about 1 to about 99 weight percent, and more usually in the range of from about 5 to about 80 weight percent, of the dry composite.

Extrudates of 1.6 mm (1/16 inch) typically have a crush strength of from about 22 to 107 N (5 to about 24 pounds) when the crushing force is applied over a 3.2 mm (1/8 inch) length. Crush strengths range from about 7 N/mm to 33.6 N/mm (40 to about 192 lb/linear inch). In addition, the low acidity refractory oxide-bound extrudates (not 100% zeolite) are also characterized by a high porosity, i.e., between about 0.43 and about 1 cc/gram (measured by mercury porosimeter and helium absorption).

The process of this invention is concerned with hydrodewaxing of hydrocarbon feedstocks including petroleum as well as synthetic hydrocarbon feedstocks such as those resulting from the conversion of synthesis gas. The term "hydrodewaxing" as used in the specification and claims is used in its broadest sense and is intended to mean the removal of those hydrocarbons which readily solidify (waxes) from hydrocarbon stocks. Hydrocarbon feeds which can be treated include lubricating oil stocks as well as those which have a freeze point or pour point problem, i.e. stocks boiling above about 177°C (350°F) such as whole crude, distillates, bright stock, etc.

Hydrodewaxing conditions include temperatures between about 260°C (500°F) and about 538°C (1000°F), a pressure between about 690 (100) and about 20700 kPa (3000 psig) but preferably between about 1480 and 4930 kPa (200 and about 700 psig). The liquid hourly space velocity is generally between about 0.1 and about 10, preferably between about 0.5 and about 4 and the hydrogen to hydrocarbon mole ratio is generally between about 1 and about 20, preferably between about 2 and about 10.

The following examples are illustrative of the catalytic hydrodewaxing process of this invention.

## Example 1

This example illustrates the preparation of a preferred zeolite component, ZSM-35 (see U.S. Patent No. 4,016,245 for more details), employing water, pyrrolidine, sodium hydroxide, aluminum sulfate and amorphous silica (PPG Industries HiSil 233 EP) in the following molar ratios

| | |
|---|---|
| $SiO_2/Al_2O_3$ | 21 |
| $H_2O/SiO_2$ | 22 |
| $OH/SiO_2$ | 0.38 |
| $N/Al_2O_3$ | 21 |
| % solids | 12 |

The hydroxide concentration is based on inorganic sources only. The reaction mixture was crystallized in 92 hours in a stirred autoclave at 104°C (220°F). The zeolite was subsequently washed and dried at 121°C (250°F) overnight. Chemical properties of the zeolite are set forth in Table 1 as follows:

TABLE 1:
Chemical properties of ZSM-35

| | |
|---|---|
| N, wt% | 2.04 |
| C, wt% | 7.39 |
| Na, wt% | 1.2 |
| $SiO_2$, wt% | 77.9 |
| $Al_2O_3$, wt% | 6.4 |
| Ash, wt% | 87.6 |
| Crystallinity, % (ZSM-35 Standard) | 100 |

## Example 2

This example illustrates the preparation of an alumina-bound ZSM-35 hydrodewaxing catalyst similar to that described in U.S. Patent No. 4,372,839 employing the ZSM-35 of Example 1.

The zeolite was mixed with alumina to form a mixture of 65 parts (on a dry basis) zeolite and 35 parts alumina. Enough water was added to the mixture so that the resulting catalyst could be formed into 1.6 mm (1/16") extrudate. The extrudate was dried at 121°C (250°F) and then calcined as follows: (i) 3 hours at 482°C (900°F) in flowing nitrogen, (ii) 1 hour at 482°C (900°F) in a flowing 50 vol% nitrogen/50 vol% air mixture, and (iii) 3 hours at 538°C (1000°F) in flowing air. The calcined catalyst was activated by aqueous exchanges with 1N NH4NO3 solution following by drying at 121°C (250°F) and calcining for 3 hours at 538°C (1000°F) in flowing air. Physical properties of the alumina-bound catalyst composition are set forth in Table 2 as follows:

TABLE 2:
Physical properties of alumina-bound ZSM-35 catalyst

| | Alumina-Bound ZSM-35 |
|---|---|
| Alpha Value** | 82 |
| Na, ppm | 175 |
| Density, g/cc | |
| Real | 2.60 |
| Particle | 0.88 |
| Surface Area, m²/g | 299 |
| Pore Volume, cc/g | 0.75 |

** The alpha value, or alpha activity, is a measure of normal hexane cracking conversion relative to a silica-alumina cracking catalyst. The alpha test is described in a Letter to the Editor entitled "Superactive Crystalline Aluminosilicate Hydrocarbon Cracking Catalyst" by P. B. Weisz and J. N. Miale, Journal of Catalysis, 4, pp. 527—529 (1965).

## Example 3

This example illustrates the preparation of a low acidity silica-bound ZSM-35 hydrodewaxing catalyst in accordance with the present invention employing the ZSM-35 of Example 1.

Sixty-five weight percent of ZSM-35 in the form of a powder was mixed with 35 weight percent (dry basis) of silica consisting of a mixture of 17.5 weight percent amorphous precipitated silica (PPG Industries HiSil 233 EP) and 17.5 weight percent colloidal silica (Ludox, HS-30). A homogeneous mix was obtained by mulling. The moisture content of the mix was adjusted to 42.5 weight percent with deionized water. After additional mulling, the resulting paste was extruded using a 50.8 mm (2″) Bonnot extruder to yield a 1.6 mm (1/16″) diameter extrudate. The extrudate was further processed in substantially the same manner as the aluminabound catalyst of Example 2. Physical properties of the silica-bound ZSM-35 catalyst are set forth in Table 3 as follows:

### TABLE 3:
### Physical properties of Silica-Bound ZSM-35 catalyst

| | |
|---|---|
| Alpha Value | 105 |
| Na, ppm | 255 |
| Density, g/cc | |
| Real | 2.29 |
| Particle | 0.94 |
| Surface Area, m$^2$/g | 279 |
| Pore Volume, cc/g | 0.62 |

## Example 4 (Comparison)

The alumina-bound ZSM-35 catalyst of Example 2 was evaluated in the hydrodewaxing of a light neutral raffinate carried out at typical hydrodewaxing conditions, i.e., 1 LHSV, 2860 kPa (400 psig), and 71000 scf H$_2$/B (2500 scf) H$_2$/B. The physical properties of the raffinate are set forth in Table 4:

### TABLE 4:
### Physical properties of light neutral raffinate

| | | |
|---|---|---|
| Pour Point, °C (°F) | D97 | 38 (100) |
| K.V. at 54°C (100°F,) cs | D445-5 | 5.117 |
| Grwvity, API | D1298-3 | 32.8 |
| Sulfur, wt% | 967-1 | 0.27 |
| Nitrogen, ppm | M1208 | 18 |
| Hydrogen, wt% | M1252 | 14.24 |
| Aniline Point, °C (°F) | D611 | 109 (228.0) |
| CCR, wt% | D189 | 0.020 |
| Distillation | | D1160-1 |
| (vol % Distilled) | IBP, °C (°F) | 374 (706) |
| | 5% | 403 (757) |
| | 10% | 410 (769) |
| | 30% | 425 (797) |
| | 50% | 438 (820) |
| | 70% | 455 (851) |
| | 80% | 467 (873) |
| | 90% | 481 (898) |
| | 95% | 492 (917) |
| | EP | 499 (931) |

The charge stock was introduced at 317°C (603°F). After the first day-on-stream, a −1°C (30°F) pour lube product was obtained. Attempting to make target pour lube product 11.1±2.8°C (20±5°F), the reactor temperature was increased by about 11°C/day (20°F/day) to a temperature of 340°C (643°F). As shown in Fig. 1, during this period, the lube pour point remained constant at −1.1°C (30°F). Thereafter, the reactor temperature was maintained at 340°C (643°F) for 10 days; the pour point increased at 0.5—1.1°C/day (1—2°F/day). At the end of the run, the reactor temperature was varied over a 44.4°C (80°F) temperature range in an attempt to make a −6.7°C (20°F) lube product, target lube product could not be produced.

Table 5 below sets forth the yields and properties of lube products obtained with unsteamed alumina-bound ZSM-35 in accordance with this example.

TABLE 5:
Yields and properties of lube products obtained with
unsteamed alumina-bound ZSM-35

| | | |
|---|---|---|
| HDW Temp., °C (°F) | 326 (618) | 339 (643) |
| $H_2$ Pressure, kPa (psig) | 2760 (400) | 2760 (400) |
| LHSV | 0.94 | 0.94 |
| Yields Based on Wt% of | | |
| Liquid Charge | | |
| $C_1$—$C_3$ | 8.8 | .5 |
| $C_4$'s | 3.0 | 2.2 |
| $C_5$'s | 2.2 | 1.5 |
| $C_6$—321°C (610°F) | 4.9 | 3.4 |
| 321°C$^+$ (610°F$^+$) | 82 | 86 |
| Material Balance, wt% | 103 | 101 |
| Lube Properties | | |
| Pour Point, °C (°F) | −1.1 (30) | 7.2 (45) |
| Cloud Point, °C (°F) | 6.7 (44) | 15.6 (60) |
| Sulfur, wt% | 0.30 | 0.31 |
| Nitrogen, ppm | 18 | 18 |

Example 5

The silica-bound ZSM-35 hydrodewaxing catalyst of Example 3 was evaluated with the same light neutral raffinate of Example 4 and under essentially the same processing conditions employed in that example. The charge stock was introduced at 319°C (607°F). As shown in Fig. 2, the silica-bound ZSM-35 was able to produce −6.7±2.8°C (20±5°F) pour lube product for more than 21 days on stream.

Table 6 below sets forth the yields and properties of lube products obtained with unsteamed silica-bound ZSM-35 in accordance with this example.

TABLE 6:
Yields and properties of lube products obtained with unsteamed
silica-bound ZSM-35

| | | |
|---|---|---|
| HDW Temp., °C (°F) | 319 (607) | 321 (610) |
| $H_2$ Pressure, kPa (psig) | 2760 (400) | 2760 (400) |
| LHSV | 1.07 | 1.02 |
| Yields Based on Wt% of | | |
| Liquid Charge | | |
| $C_1$—$C_3$ | 8.9 | 9.7 |
| $C_4$'s | 3.7 | 3.1 |
| $C_5$'s | 2.6 | 2.0 |
| $C_6$—321°C (610°F) | 3.4 | 3.5 |
| 321°C (610°F$^+$) | 82 | 82 |
| Material Balance, wt% | 97 | 100 |
| Lube Properties | | |
| Pour Point, °C (°F) | −6.7 (20) | −3.9 (25) |
| Cloud Point, °C (°F) | −1.1 (30) | 0 (32) |
| Sulfur, wt% | 0.32 | 0.34 |
| Nitrogen, ppm | 25 | 26 |

As shown by the performance data plotted in Figs. 1 and 2, while the alumina-bound ZSM-35 irreversibly aged at 0.5—1.1°C/day (1—2°F/day), the silica-bound ZSM-35 catalyst aged irreversibly at <0.1°C/day (<0.2°F/day). And while the alumina-bound ZSM-35 was unable to produce a <−1.1°C (<30°F) pour lube product, such a product was obtained with the silica-bound ZSM-35.

As one would expect, when used in a hydrodewaxing operation under conditions such as those given above, a bound ZSM-35, irrespective of the nature of the binder, will generally provide lube products of higher V.I. than that with the corresponding bound ZSM-5 catalyst. Thus, a silika-bound ZSM-35 prepared in accordance with this invention and an alumina bound ZSM-35 catalyst when both used in such an operation will demonstrate this expected increase in V.I. However, compared to the alumina-bound ZSM-35, the silica-bound ZSM-35 additionally demonstrates significantly greater stability and longer catalyst life.

# EP 0 313 276 B1

## Claims

1. A catalytic hydrodewaxing process which comprises contacting a waxy hydrocarbon feed with an extruded low acidity refractory oxide-bound intermediate pore size catalyst composition under hydrodewaxing conditions to provide a lube product, said catalyst composition being prepared with at least an extrusion facilitating amount of low acidity refractory oxide in colloidal form and demonstrating significantly increased stability and activity in such process compared to the same zeolite bound with an acidic binder material.

2. The process of Claim 1 wherein the low acidity refractory oxide is an oxide of a metal wherein said metal is selected from the group consisting of metals of Group IVA and/or and Group IVB of the Periodic Table of the Elements.

3. The process of Claim 2 wherein the metal is silicon, germanium, titanium and/or zirconium.

4. The process of Claim 2 wherein the zeolite is bound with a composition containing at least about 20 weight percent of said low acidity refractory oxide.

5. The process of Claim 2 wherein the zeolite is bound with a composition containing at least about 50 weight percent of said low acidity refractory oxide.

6. The process of Claim 4 wherein the zeolite is bound with a mixture of low acidity refractory oxide and acidic refractory oxide.

7. The process of Claim 5 wherein the zeolite is bound with a mixture of low acidity refractory oxide and acidic refractory oxide.

8. The process of Claim 1 wherein the intermediate pore size zeolite is selected from the group consisting of ZSM-5, ZSM-11, ZSM-12, ZSM-22, ZSM-23 and ZSM-35.

9. The process of Claim 1 wherein the zeolite is associated with a hydrogenation-dehydrogenation metal species.

10. The process of claim 6 wherein the metal species is nickel.

## Patentansprüche

1. Katalytisches Hydroentparaffinierungsverfahren, das den Kontakt einer paraffinhaltigen Kohlenwasserstoffzufuhr mit einer extrudierten, feuerfesten, Oxid-gebundenen Katalysatorzusammensetzung mit geringer Acidität und mittlerer Porengröße bei Hydroentparaffinierungsbedingungen umfaßt, um ein Schmierölprodukt zu schaffen, wobei diese Katalysatorzusammensetzung mit mindestens einer, die Extrusion erleichternden Menge eines feuerfesten Oxids, mit geringer Acidität in Kolloidform, hergestellt wird, die verglichen mit dem gleichen Zeolith, der mit einem sauren Bindemittelmaterial gebunden ist, eine merklich verbesserte Stabilität und Aktivität in diesem Verfahren aufweist.

2. Verfahren nach Anspruch 1, worin das feuerfeste Oxid mit geringer Acidität ein Metalloxid ist, wobei dieses Metall aus der Gruppe ausgewählt ist, die aus Metallen der Gruppe IVA und/oder der Gruppe IVB des Periodensystems der Elemente besteht.

3. Verfahren nach Anspruch 2, worin das Metall Silicium, Germanium, Titan und/oder Zirkon ist.

4. Verfahren nach Anspruch 2, worin der Zeolith mit einer Zusammensetzung gebunden ist, die mindestens etwa 20 Gew.-% des feuerfesten Oxids mit geringer Acidität erhält.

5. Verfahren nach Anspruch 2, worin der Zeolith mit einer Zusammensetzung gebunden ist, die mindestens etwa 50 Gew.-% des feuerfesten Oxids mit geringer Acidität enthält.

6. Verfahren nach Anspruch 4, worin der Zeolith mit einer Mischung eines feuerfesten Oxids mit geringer Acidität und eines sauren, feuerfesten Oxides, gebunden ist.

7. Verfahren nach Anspruch 5, worin der Zeolith mit einer Mischung eines feuerfesten Oxids mit geringer Acidität und eines sauren, feuerfesten Oxids gebunden ist.

8. Verfahren nach Anspruch 1, worin der Zeolith mit mittlerer Porengröße aus der Gruppe ausgewählt ist, die aus ZSM-5, ZSM-11, ZSM-12, ZSM-22, ZSM-23 und ZSM-35 besteht.

9. Verfahren nach Anspruch 1, worin der Zeolith mit einer Hydrierungs-Dehydrierungs-Metallart verbunden ist.

10. Verfahren nach Anspruch 6, worin die Metallart Nickel ist.

## Revendications

1. Un procédé d'hydrodéparaffinage catalytique consistant à mettre une charge d'hydrocarbures paraffiniques au contact d'une composition catalytique de dimension de pores intermédiaire liée à un oxyde réfractaire de faible acidité extrudé dans des conditions d'hydrodéparaffinage pour obtenir un produit lubrifiant, cette composition de catalyseur étant préparée avec au moins une quantité propre à faciliter l'extrusion, d'un oxyde réfractaire de faible acidité se trouvant sous forme colloïdale et présentant significativement améliorée et une activité dans un tel procédé une activité et une stabilité nettement améliorées par comparaison avec celles de la même zéolite liée à un matériau liant acide.

2. Le procédé selon la revendication 1, dans lequel l'oxyde réfractaire de faible acidité est un oxyde de métal dont le métal est choisi dans le groupe constitué par les métaux du groupe IVA et/ou du groupe IVB de la Classification Périodique des Eléments.

3. Le procédé selon la revendication 2, caractérisé en ce que le métal est du silicium, du germanium, du titane et/ou du zirconium.

4. Le procédé selon la revendication 2, caractérisé en ce que la zéolite est liée à une composition contenant au moins environ 20% en poids de cet oxyde réfractaire de faible acidité.

5. Le procédé selon la revendication 2, dans lequel la zéolite est liée à une composition contenant au moins environ 50% en poids de cet oxyde réfractaire de faible acidité.

6. Le procédé selon la revendication 4, caractérisé en ce que la zéolite est liée à un mélange d'un oxyde réfractaire de faible acidité et d'un oxyde réfractaire acide.

7. Le procédé selon la revendication 5, caractérisé en ce que la zéolite est liée à un mélange d'un oxyde réfractaire de faible acidité et d'un oxyde réfractaire acide.

8. Le procédé selon la revendication 1, caractérisé en ce que la zéolite de dimension de pores intermédiaire est choisie dans le groupe constitué par ZSM-5, ZSM-11, ZSM-12, ZSM-22, ZSM-23 et ZSM-35.

9. Le procédé selon la revendication 1, caractérisé en ce que la zéolite est associée à un métal ayant des propriétés d'hydrogénation/déshydrogénation.

10. Le procédé selon la revendication 6, caractérisé en ce que ledit métal est le nickel.

## FIG. 1

### ALUMINA-BOUND ZSM-35 PERFORMANCE

## FIG. 2

### SILICA-BOUND ZSM-35 PERFORMANCE